# EUROPÄISCHE PATENTANMELDUNG

(11) **EP 1 022 885 A2**
(43) Veröffentlichungstag der Anmeldung: **26.07.2000**
(21) Anmeldenummer: 00100907.5
(22) Anmeldetag: 18.01.2000
(51) Int. Cl.: H04M 1/57, H04M 1/274, H04M 1/65

(54) **Vorrichtung zur Aufzeichnung einer Nachricht**

(30) Priorität: 19.01.1999 DE 19901833
(71) Anmelder: ROBERT BOSCH GMBH, 70442 Stuttgart (DE)
(72) Erfinder: Von Haefen, Holger, 38300 Wolfenbuettel (DE)

(57) **Zusammenfassung**

Es wird eine Vorrichtung (1) zur Aufzeichnung einer Nachricht (85, 90) eines an einem Telekommunikationsendgerät (5) eingehenden Rufes in einem dem Telekommunikationsendgerät (5) zugeordneten, vorzugsweise digitalen ersten Speicher (10) vorgeschlagen, die eine eindeutige Zuordnung der aufgezeichneten Nachricht (85, 90) zum rufenden Teilnehmer ermöglicht. Eine Speicherung einer mit dem eingehenden Ruf an das Telekommunikationsendgerät (5), insbesondere über ein digitales Telekommunikationsnetz (99), übertragenen Identifizierungsinformation (15, 16), die den rufenden Teilnehmer kennzeichnet, erfolgt im ersten Speicher (10).

## Beschreibung

### Stand der Technik

Die Erfindung geht von einer Vorrichtung zur Aufzeichnung einer Nachricht nach der Gattung des Hauptanspruchs aus.

Aus dem Katalog 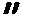 Bosch Heim-und Bürokommunikation 1996/97. In jeder Hinsicht eine gelungene Verbindung." ist der Anrufbeantworter TAM-Com 315 bekannt, bei dem eine Nachricht eines an einem Telekommunikationsendgerät eingehenden Rufes in einem dem Telekommunikationsendgerät zugeordneten Speicher digital gespeichert werden kann. Dabei kann auch eine Daten-/Zeitansage eingegangener Nachrichten erfolgen. Außerdem ist eine Fernabfrage von auf dem Anrufbeantworter abgespeicherten Nachrichten über ein Telefon nach dem Mehrfrequenzverfahren (MFV) möglich.

### Vorteile der Erfindung

Die erfindungsgemäße Vorrichtung mit den Merkmalen des Hauptanspruchs hat demgegenüber den Vorteil, daß eine Speicherung einer mit dem eingehenden Ruf an das Telekommunikationsendgerät übertragenen Identifizierungsinformation, die einen rufenden Teilnehmer kennzeichnet, im ersten Speicher erfolgt. Auf diese Weise kann der erste Speicher auch als Anrufliste dienen, die beispielsweise per Fernabfrage abgerufen werden kann. Die Funktionalität des ersten Speichers zur Aufzeichnung einer Nachricht eines eingehenden Ruf es wird somit erhöht und weitere Speichermittel für eine eigene Anrufliste werden eingespart.

Durch die in den Unteransprüchen aufgeführten Maßnahmen sind vorteilhafte Weiterbildungen und Verbesserungen der im Hauptanspruch angegebenen Vorrichtung möglich.

Besonders vorteilhaft ist es, daß die Speicherung der Identifizierungsinformation im ersten Speicher nur dann erfolgt, wenn der eingehende Ruf nicht entgegengenommen wird. Auf diese Weise wird Speicherplatz im ersten Speicher eingespart und dennoch eine Identifizierbarkeit eingehender Rufe bei Abwesenheit eines Benutzers des Telekommunikationsendgerätes gewährleistet. Nach seiner Rückkehr kann der Benutzer die gespeicherten Identifizierungsinformationen von Rufen, die während seiner Abwesenheit eingegangen sind, abrufen.

Besonders vorteilhaft ist es, daß bei Nichtentgegennahme des eingehenden Rufes, vorzugsweise nach einer vorgegebenen Anzahl von Rufsignalen, eine Schleifenbelegung im Telekommunikationsendgerät erfolgt, daß während der Schleifenbelegung, vorzugsweise nach einem Signalton, eine Nachricht des rufenden Teilnehmers im ersten Speicher ablegbar ist und daß eine Speicherung der Identifizierungsinformation in Zuordnung zu der Nachricht im ersten Speicher erfolgt. Auf diese Weise kann besonders bei Ausbildung der Identifizierungsinformation als Rufnummer eine im ersten Speicher abgespeicherte Nachricht eindeutiger dem rufenden Teilnehmer zugeordnet werden, so daß vor allem für den Fall, daß der rufende Teilnehmer mittels der Nachricht seine Rufnummer nicht angegeben oder eine vom rufenden Teilnehmer angegebene Rufnummer aufgrund schlechter Übertragungsqualität für den Benutzer des Telekommunikatinsendgerätes schwer verständlich ist, die Rufnummer des rufenden Teilnehmers anhand der dem rufenden Teilnehmer zugeordneten Identifizierungsinformation eindeutig, fehlerfrei und deutlich dem Benutzer des Telekommunikationsendgerätes für einen Rückruf zur Verfügung steht.

Ein weiterer Vorteil besteht darin, daß eine Decodierschaltung vorgesehen ist, die eine über ein analoges Telekommunikationsnetz übertragene Identifizierungsinformation dekodiert. Auf diese Weise läßt sich eine Speicherung der Identifizierungsinformation im ersten Speicher der Vorrichtung auch bei Anschluß des Telekommunikationsendgerätes an ein analoges Telekommunikationsnetz realisieren.

Besonders vorteilhaft ist es, daß die Vorrichtung mit der Identifizierungsinformation eine Rufnummer des rufenden Teilnehmers empfängt und daß eine Speicherung der Rufnummer im ersten Speicher erfolgt. Auf diese Weise ist der rufende Teilnehmer eindeutig für die Durchführung eines automatischen oder vereinfachten Rückrufs identifiziert.

Ein weiterer Vorteil besteht darin, daß eine Sprachsyntheseeinheit vorgesehen ist und daß die Sprachsyntheseeinheit die im ersten Speicher abgelegte Identifizierungsinformation in Sprachform ausgibt, wenn eine entsprechende Abtrageanforderung detektiert wird. Auf diese Weise ist die Identifizierungsinformation in für den Benutzer verständlicher Form wiedergebbar, ohne daß eine Anzeigevorrichtung erforderlich ist.

Ein weiterer Vorteil besteht darin, daß die Vorrichtung als Identifizierungsinformation einen Namen und/oder eine Adresse des rufenden Teilnehmers durch Zuordnung der Identifizierungsinformation zu Namens- und/oder Adreßdaten mittels einer insbesondere in einem zweiten Speicher abgelegten Zuordnungstabelle ermittelt und daß eine Speicherung des Namens im ersten Speicher erfolgt. Auf diese Weise ist eine eindeutige Zuordnung des eingehenden Rufes oder einer im Speicher abgespeicherten Nachricht des eingehenden Rufes zu einem Benutzer eines rufenden Teilnehmerapparates möglich, sofern dieser mittels der Nachricht nicht seinen Namen und/oder seine Adresse hinterläßt.

Ein weiterer Vorteil besteht darin, daß die im ersten Speicher abgelegte Identifizierungsinformation an einer Anzeigeeinheit wiedergebbar ist, wenn eine entsprechende Abfrageanforderung detektiert wird. Auf diese Weise ist die Identifizierungsinformation in für den Benutzer verständlicher Form dauerhaft wiedergebbar.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild eines Telekommunikationsendgerätes mit einer erfindungsgemäßen Vorrichtung, Figur 2 den Inhalt eines Speichers der erfindungsgemäßen Vorrichtung und Figur 3 sowie Figur 4 einen Ablaufplan für die Funktionsweise einer Steuerung des Telekommunikationsendgerätes.

### Beschreibung des Ausführungsbeispiels

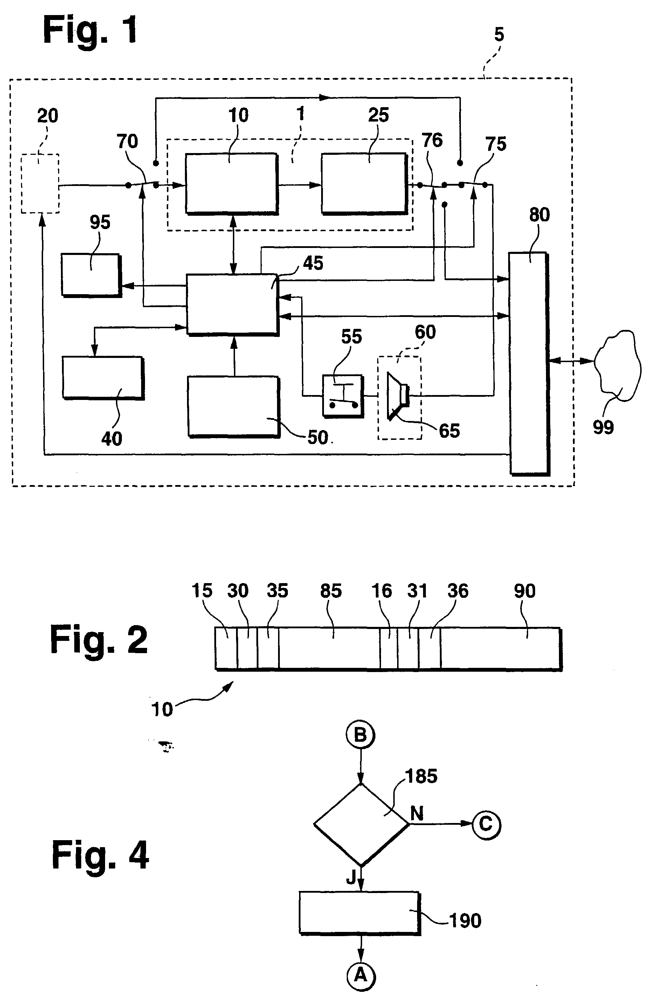

In Figur 1 kennzeichnet 5 ein mobiles oder ein drahtgebundenes Telekommunikationsendgerät. Das Telekommunikationsendgerät 5 ist Teilnehmer eines analogen oder digitalen Telekommunikationsnetzes 99. Über eine Telekommunikationsschnittstelle 80 hat das Telekommunikationsendgerät 5 Zugang zum Telekommunikationsnetz 99. An die Telekommunikationsschnittstelle 80 ist eine Steuerung 45 des Telekommunikationsendgerätes 5 angeschlossen. Die Telekommunikationsschnittstelle 80 ist weiterhin über einen ersten Schalter 70 mit einem ersten Speicher 10 einer Vorrichtung 1 verbindbar, wobei der erste Schalter 70 von der Steuerung 45 angesteuert wird. Handelt es sich bei dem Telekommunikationsnetz 99 um ein analoges Telekommunikationsnetz, so ist zwischen dem ersten Schalter 70 und der Telekommunikationsschnittstelle 80 eine Dekodierschaltung 20 angeordnet. Handelt es sich bei dem Telekommunikationsnetz 99 jedoch um ein digitales Telekommunikationsnetz, insbesondere um ein ISDN (Integrated Services Digital Network) so ist die Telekommunikationsschnittstelle 80 direkt mit dem ersten Schalter 70 verbunden. Der erste Speicher 10 ist mit der Steuerung 45 und mit einer Sprachsyntheseeinheit 25 verbunden. Die Sprachsyntheseeinheit 25 ist über einen dritten Schalter 76 mit der Telekommunikationsschnittstelle 80 verbindbar, wobei der dritte Schalter 76 von der Steuerung 45 angesteuert wird. Über den dritten Schalter 76 und einen zweiten Schalter 75 ist die Sprachsyntheseeinheit 25 auch mit einem Lautsprecher 65 eines Handapparates 60 verbindbar. Die Telekommunikationsschnittstelle 80 ist, gegebenenfalls über die Dekodierschaltung 20, über den ersten Schalter 70 und den zweiten Schalter 75 ebenfalls mit dem Lautsprecher 65 verbindbar, wobei die Vorrichtung 1 überbrückt wird, die neben dem ersten Speicher 10 auch die Sprachsyntheseeinheit 25 umfaßt. Der zweite Schalter 75 wird ebenfalls von der Steuerung 45 angesteuert. Der Handapparat 60 wirkt mit einem Gabelschalter 55 zusammen, wobei der Gabelschalter 55 ebenfalls mit der Steuerung 45 verbunden ist. An die Steuerung 45 sind außerdem eine Anzeigeeinheit 95, ein zweiter Speicher 40 und eine Eingabeeinheit 50 angeschlossen. Die Anzeigeeinheit 95 kann dabei beispielsweise als Flüssigkristallanzeige ausgebildet sein. Die Eingabeeinheit 50 kann beispielsweise eine numerische oder eine alphanumerische Tastatur umfassen.

Bei einem aus dem Telekommunikationsnetz 99 am Telekommunikationsendgerät 5 eingehenden Ruf eines rufenden Teilnehmers werden Identifizierungsinformationen zwischen den Ruftönen übertragen. Die Übertragung solcher Identifizierungsinformationen wird als Calling/Called Line Identification (CLI) bezeichnet. Bei Ausbildung des Telekommunikationsnetzes 99 als analoges Telekommunikationsnetz sind die am Telekommunikationsendgerät 5 vom Telekommunikationsnetz 99 empfangenen Identifizierungsinformationen von der Dekodierschaltung 20 vor einer Speicherung im ersten Speicher 10 zu dekodieren. Bei Ausbildung des Telekommunikationsnetzes 99 als digitales Tele-Kommunikationsnetz, insbesondere als ISDN (Integrated Services Digital Network) ist eine Dekodierung und damit die Dekodierschaltung 20 für die im ersten Speicher 10 abzuspeichernden Identifizierungsinformationen nicht erforderlich. Daher ist in Figur 1 die Dekodierschaltung 20 gestrichelt eingetragen. In einer ersten Schalterstellung des ersten Schalters 70 ist die Telekommunikationsschnittstelle 80, gegebenenfalls über die Dekodierschaltung 20 mit dem ersten Speicher 10 verbunden. In einer ersten Schalterstellung des dritten Schalters 76 und in einer ersten Schalterstellung des zweiten Schalters 75 ist die Sprachsyntheseeinheit 25 mit dem Lautsprecher 65 verbunden. In einer zweiten Schalterstellung des dritten Schalters 76 ist die Sprachsyntheseeinheit 25 mit der Telekommunikationsschnittstelle 80 verbunden. In einer zweiten Schalterstellung des ersten Schalters 70 und in einer zweiten Schalterstellung des zweiten Schalters 75 ist die Telekommunikationsschnittstelle 80, gegebenenfalls über die Dekodierschaltung 20 mit dem Lautsprecher 65 verbunden.

Bei einem am Telekommunikationsendgerät 5 eingehenden Ruf befindet sich der erste Schalter 70 zunächst in seiner ersten Schalterstellung. Die Identifizierungsinformation wird dabei in Form der Rufnummer des rufenden Teilnehmers zwischen den Ruftönen an das Telekommunikationsendgerät 5 vom Telekommunikationsnetz 99 übertragen und gelangt zum ersten Speicher 10. Es kann vorgesehen sein, daß die Steuerung 45 für jeden eingehenden Ruf eine Speicherung der Rufnummer des rufenden Teilnehmers im ersten Speicher 10 veranlaßt. Der erste Speicher 10 dient dann als Anrufliste. Es kann jedoch auch vorgesehen sein, daß für den Fall, in dem ein eingehender Ruf nach Wiedergabe einer Anzahl von Ruftönen, die unter einem vorgegebenen Wert liegt, entgegengenommen wird, die Steuerung 45 den ersten Speicher 10 zur Löschung der mit dem eingehenden Ruf übertragenen Rufnummer veranlaßt. Die mit dem eingehenden Ruf übertragene Rufnummer des rufenden Teilnehmers wird somit im ersten Speicher 10 nur dann gespeichert, wenn der eingehende Ruf nach Wiedergabe einer Anzahl von Ruftönen, die über dem vorgegebenen Wert liegt, nicht entgegen genommen wurde. Ein eingehender Ruf wird beispielsweise durch Abheben des Handapparates 60 entgegengenommen, wodurch der Gabelschalter 55 betätigt wird und eine Schleifenbelegung im Telekommunikationsendgerät 5 erfolgt. Auf diese Weise ist die Steuerung 45 über die Entgegennahme des eingehenden Rufes informiert. Sie veranlaßt daraufhin, den ersten Schalter 70 und den zweiten Schalter 75 in ihre jeweils zweite Schalterstellung zu bringen, so daß über das Telekommunikationsnetz 99 übertragene Sprachsignale am Lautsprecher 65 akustisch wiedergebbar sind. Die für die Umwandlung der über das Telekommunikationsnetz 99 übertragenen Sprachsignale in akustische Signale erforderlichen Funktionsblöcke sind in Figur 1 aus Gründen der Übersichtlichkeit nicht dargestellt.

Wird jedoch ein eingehender Ruf nach Wiedergabe einer Anzahl von Ruftönen, die über dem vorgegebenen Wert liegt, nicht entgegengenommen, so wird dies aufgrund der in dem entsprechenden Zeitraum nicht erfolgten Betätigung des Gabelschalters 55 von der Steuerung 65 ebenfalls detektiert, die daraufhin den ersten Schalter 70 in seiner ersten Schalterstellung beläßt und den dritten Schalter 76 veranlaßt, in seine zweite Schalterstellung umzuschalten, falls er nicht bereits in seine zweite Schalterstellung geschaltet ist. Der erste Speicher 10 ist als digitaler Speicher ausgebildet. Im ersten Speicher 10 kann ein vom Benutzer des Telekommunikationsendgerätes 5 über ein in Figur 1 nicht dargestelltes Mikrophon des Handapparates 60 gesprochener Ansagetext hinterlegt sein, wozu das Mikrophon entsprechend mit dem ersten Speicher 10 verbunden ist. Zur Digitalisierung von im ersten Speicher 10 abzulegenden Sprachdaten kann im ersten Speicher 10 auch ein Analog-/Digitalwandler vorgesehen sein. Der Ansagetext wird dann transparent von der Sprachsyntheseeinheit 25 an die Telekommunikationsschnittstelle 80 durchgereicht. Bei Ausbildung des Telekommunikationsnetzes 99 als analoges Telekommunikationsnetz ist in der Telekommunikationsschnittstelle 80 vor Weiterleitung des Ansagetextes an den rufenden Teilnehmer über das Telekommunikationsnetz 99 noch eine Digital-/Analogwandlung des Ansagetextes durch die Sprachsyntheseeinheit 25 erforderlich. Der Ansagetext wird üblicherweise mit einem Signalton abgeschlossen. Nach dem Signalton vom rufenden Teilnehmer gesprochene Nachrichten werden dann über das Telekommunikationsnetz 99 an das Telekommunikationsendgerät 5 übertragen und im ersten Speicher 10 digital abgespeichert, wozu wiederum im Falle der Ausbildung des Telekommunikationsnetzes 99 als analoges Telekommunikationsnetz in der Telekommunikationsschnittstelle 80 eine Analog-/Digitalwandlung der empfangenen Sprachdaten erfolgen muß. Es kann jedoch auch vorgesehen sein, daß eine solche Analog-/Digitalwandlung erst im ersten Speicher 10 vor Abspeicherung erfolgt. Sobald die Speicherkapazität des ersten Speichers 10 überschritten wird oder der rufende Teilnehmer die bestehende Fernsprechverbindung beendet, wird der Speichervorgang im ersten Speicher 10 abgeschlossen. Die beschriebene Analog- /Digitalwandlung bzw. Digital- /Analogwandlung ist nicht erforderlich, wenn der erste Speicher 10 analog ausgebildet ist. Entsprechend kann auch der zweite Speicher 40 analog oder digital ausgebildet sein.

Gemäß Figur 2 ist beispielhaft eine Anordnung von in dem ersten Speicher 10 gespeicherten Daten dargestellt. Einer ersten Nachricht 85 eines ersten rufenden Teilnehmers ist dabei eine erste Rufnummer 15, ein erstes Datum 30 und eine erste Uhrzeit 35 vorangestellt. Die erste Rufnummer 15 ist die Rufnummer des ersten rufenden Teilnehmers, das erste Datum 30 und die erste Uhrzeit 35 kennzeichnen den Zeitpunkt des vom ersten rufenden Teilnehmer eingehenden Rufes. Anschließend ist im ersten Speicher 10 eine zweite Nachricht 90 eines zweiten rufenden Teilnehmers abgespeichert, der eine zweite Rufnummer 16, ein zweites Datum 31 und eine zweite Uhrzeit 36 vorangestellt sind, wobei die zweite Rufnummer 16, das zweite Datum 31 und die zweite Uhrzeit 36 zwischen der ersten Nachricht 85 und der zweiten Nachricht 90 abgespeichert sind. Die zweite Rufnummer 16 ist dabei die Rufnummer des zweiten rufenden Teilnehmers, das zweite Datum 31 und die zweite Uhrzeit 36 kennzeichnen den Zeitpunkt des eingehenden Rufes des zweiten rufenden Teilnehmers.

Der Benutzer des Telekommunikationsendgerätes 5 kann mittels der Eingabeeinheit 50 eine Wiedergabe von in dem ersten Speicher 10 gespeicherten Nachrichten, Rufnummern, Daten und Uhrzeiten veranlassen. Die Steuerung 45 veranlaßt dazu den zweiten Schalter 75 und den dritten Schalter 76 zur Umschaltung in deren jeweilige erste Schalterstellung, falls diese Schalterstellung nicht bereits geschaltet ist. Die im ersten Speicher 10 gespeicherten Nachrichten 85, 90 werden dann vom ersten Speicher 10 über die Sprachsyntheseeinheit 25 transparent an den Lautsprecher 65 zur akustischen Wiedergabe weitergeleitet, wobei Funktionsblöcke zur Umwandlung der digital im ersten Speicher 10 gespeicherten Sprachdaten in akustisch wiedergebbare Daten in Figur 1 nicht dargestellt sind. In Zuordnung zur Wiedergabe der ersten Nachricht 85 wird dabei vom Lautsprecher 65 auch die erste Rufnummer 15, das erste Datum 30 und die erste Uhrzeit 35 akustisch wiedergegeben. In Zuordnung zur zweiten Nachricht 90 werden entsprechend vom Lautsprecher 65 die zweite Rufnummer 16, das zweite Datum 31 und die zweite Uhrzeit 36 akustisch wiedergegeben. Genauso wie die Wiedergabe der ersten Nachricht 85 und der zweiten Nachricht 90 erfolgt die Wiedergabe der Rufnummern 15, 16 der Daten 30, 31 und der Uhrzeiten 35, 36 in Sprachform, wozu jedoch die Rufnummern 15, 16, die Daten 30, 31 und die Uhrzeiten 35, 36 zuvor einer Sprachsynthese durch die Sprachsyntheseeinheit 25 unterzogen werden. Durch die Zuordnung der Rufnummern 15, 16 zu der jeweiligen Nachricht 85, 90 wird der Benutzer des Telekommunikationsendgerätes 5 in die Lage versetzt, einen Rückruf an den ersten rufenden Teilnehmer oder an den zweiten rufenden Teilnehmer einzuleiten. Der Rückruf kann dabei über die Tastatur der Eingabeeinheit 50 vollständig manuell erfolgen oder aufgrund der im ersten Speicher 10 gespeicherten jeweiligen Rufnummer 15, 16 von der Steuerung 45 automatisch eingeleitet werden. Die automatische Einleitung des Rückrufs kann dabei beispielsweise so erfolgen, daß der Benutzer des Telekommunikationsendgerätes 5 während oder nach Abhören der ersten Nachricht 85 oder der zweiten Nachricht 90 nur eine Taste an der Eingabeeinheit 50 betätigt woraufhin der zugeordnete erste rufende Teilnehmer oder der zugeordnete zweite rufende Teilnehmer automatisch unter Verwendung der im ersten Speicher 10 abgespeicherten ersten Rufnummer 15 oder der im ersten Speicher 10 abgespeicherten zweiten Rufnummer 16 zurückgerufen wird.

Zusätzlich oder alternativ zur akustischen Wiedergabe der Rufnummern 15, 16 der Daten 30, 31 und der Uhrzeiten 35, 36 ist auch eine optische Wiedergabe an der Anzeigeeinheit 95 für diese Daten möglich.

Es ist auch möglich, beispielsweise unter Verwendung des Mehrfrequenzverfahrens (MFV), eine Fernabfrage des Inhalts des ersten Speichers 10 über das Telekommunikationsnetz 99 zu veranlassen. Der Benutzer des Telekommunikationsendgerätes 5 sendet dabei über das Telekommunikationsnetz 99 einen MFV-Code an die Steuerung 45, die daraufhin den ersten Speicher 10 freigibt, den dritten Schalter 76 veranlaßt, in seine zweite Schalterstellung umzuschalten, falls er nicht bereits in seine zweite Schalterstellung geschaltet ist, und den Inhalt des ersten Speichers 10 gemäß Figur 2 über die Telekommunikationsschnittstelle 80 und das Telekommunikationsnetz 99 an den Benutzer überträgt. Die Fernabfrage kann dabei von einem beliebigen Teilnehmerapparat des Telekommunikationsnetzes 99 mit entsprechender akustischer und/oder optischer Wiedergabemöglichkeit erfolgen.

Es besteht weiterhin die Möglichkeit, anstelle oder zusätzlich zu der ersten Rufnummer 15 oder zu der zweiten Rufnummer 16 den Namen und/oder die Adresse des rufenden Teilnehmers im ersten Speicher 10 abzuspeichern, sofern die erste Rufnummer 15 oder die zweite Rufnummer 16 im zweiten Speicher 40 abgelegt und dem entsprechenden Namen und/oder der entsprechenden Adresse zugeordnet ist. Anstelle der ersten Rufnummer 15 oder der zweiten Rufnummer 16 wird dann der Name und/oder die Adresse des zugeordneten rufenden Teilnehmers nach Sprachsynthese in der Sprachsyntheseeinheit 25 akustisch am Lautsprecher 65 und/oder optisch an der Anzeigeeinheit 95 wiedergegeben bzw. an einen fernabfragenden Teilnehmer des Telekommunikationsnetzes 99 übertragen.

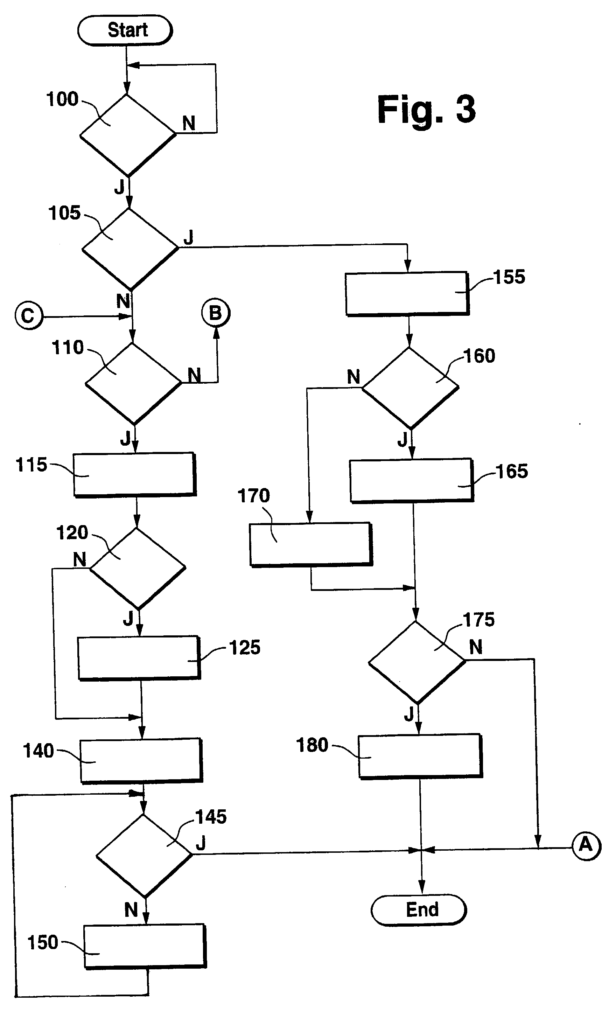

Gemäß Figur 3 und Figur 4 ist ein Ablaufplan für die Steuerung 45 des Telekommunikationsendgerätes 5 dargestellt. Bei einem Programmpunkt 100 prüft die Steuerung 45, ob ein Ruf am Telekommunikationsendgerät 5 eingeht, d. h. ob Rufsignale empfangen werden. Ist dies der Fall, so wird zu einem Programmpunkt 105 verzweigt, andernfalls wird zu Programmpunkt 100 zurückverzweigt. Bei Programmpunkt 105 prüft die Steuerung 45, ob durch den eingehenden Ruf der Inhalt des ersten Speichers 10 abgefragt wird. Ist dies der Fall, so wird zu einem Programmpunkt 155 verzweigt, andernfalls wird zu einem Programmpunkt 110 verzweigt. Bei Programmpunkt 110 prüft die Steuerung 45, ob die Anzahl der empfangenen Ruftöne über dem vorgegebenen Wert liegt. Ist dies der Fall, so wird zu einem Programmpunkt 115 verzweigt, andernfalls wird zu einem Programmpunkt 185 verzweigt. Bei Programmpunkt 185 prüft die Steuerung 45, ob der eingehende Ruf am Telekommunikationsendgerät 5 durch Abheben des Handapparates 60 bzw. durch Betätigen des Gabelschalters 55 und Schleifenbelegung entgegengenommen wurde. Ist dies der Fall, so wird zu einem Programmpunkt 190 verzweigt, andernfalls wird zu Programmpunkt 110 zurückverzweigt. Bei Programmpunkt 190 veranlaßt die Steuerung 45 eine Umschaltung des ersten Schalters 70 und des zweiten Schalters 75 in ihre jeweilige zweite Schalterstellung, sofern der erste Schalter 70 und der zweite Schalter 75 nicht bereits in ihre jeweils zweite Schalterstellung geschaltet sind, und ermöglicht so eine normale Sprechverbindung zwischen dem rufenden Teilnehmer und dem Benutzer des Telekommunikationsendgerätes 5. Anschließend wird das Programm verlassen.

Bei Programmpunkt 115 wird die Rufnummer des rufenden Teilnehmers von der Steuerung 45 detektiert, gegebenenfalls von der Dekodierschaltung 20 dekodiert und im ersten Speicher 10 abgelegt, wobei die Steuerung 45 den ersten Schalter 70 veranlaßt, in seine erste Schalterstellung umzuschalten, falls der erste Schalter 70 nicht bereits seine erste Schalterstellung einnimmt. Im beschriebenen Ausführungsbeispiel gemäß Figur 3 und Figur 4 soll angenommen werden, daß ein Ruf vom ersten rufenden Teilnehmer eingeht. Die empfangene Rufnummer ist somit die erste Rufnummer 15, die an der in Figur 2 dargestellten Position im ersten Speicher 10 abgelegt wird. Nach Programmpunkt 115 wird zu einem Programmpunkt 120 verzweigt. Bei Programmpunkt 120 prüft die Steuerung 45, ob die erste Rufnummer 15 im zweiten Speicher 40 einem Namen und/oder einer Adresse zugeordnet ist. Ist dies der Fall, so wird zu einem Programmpunkt 125 verzweigt, andernfalls wird zu einem Pogrammpunkt 140 verzweigt. Bei Programmpunkt 125 wird die erste Rufnummer 15 im ersten Speicher 10 durch den ihr zugeordneten Namen und/oder die ihr zugeordnete Adresse aus dem zweiten Speicher 40 ersetzt oder ergänzt, so daß die erste Rufnummer 15 im ersten Speicher 10 durch den ihr zugeordneten Namen und/oder die ihr zugeordnete Adresse gegebenenfalls überschrieben wird. Anschließend wird zum Programmpunkt 140 verzweigt. Bei Programmpunkt 140 wird das erste Datum 30 und die erste Uhrzeit 35 gemäß Figur 2 im ersten Speicher 10 als aktueller Zeitpunkt des ersten eingehenden Rufes abgespeichert, wobei das erste Datum 30 und die erste Uhrzeit 35 von einer in Figur 1 nicht dargestellten internen Systemuhr des Telekommuniaktionsendgerätes 5 abrufbar sind. Anschließend wird zu einem Programmpunkt 145 verzweigt. Bei Programmpunkt 145 prüft die Steuerung 45, ob der erste rufende Teilnehmer nach dem Signalton aufgelegt, d. h. die bestehende Verbindung beendet hat, so daß Schleifenfreigabe vorliegt. Ist dies der Fall, so wird ein bestehender Speichervorgang im ersten Speicher 10 durch die Steuerung 45 beendet und das Programm verlassen, andernfalls wird zu einem Programmpunkt 150 verzweigt. Bei Programmpunkt 150 veranlaßt die Steuerung 45 den ersten Speicher 10 zur Aufnahme der ersten Nachricht 85 gemäß Figur 2, wobei eine Aufnahme auch dann erfolgt, wenn der erste rufende Teilnehmer nichts spricht. Anschließend wird zu Programmpunkt 145 zurückverzweigt.

Bei Programmpunkt 155 erfolgt eine Sprachsynthese der im ersten Speicher 10 gespeicherten Rufnummern 15, 16 bzw. der eventuell dort gespeicherten Namen und/oder Adressen, der im ersten Speicher 10 gespeicherten Daten 30, 31 und Uhrzeiten 35, 36. Anschließend wird zu einem Programmpunkt 160 verzweigt. Bei Programmpunkt 160 prüft die Steuerung 45, ob die Abfrage des Inhalts des ersten Speichers 10 per Fernabfrage über das Telekommunikationsnetz 99, d. h. durch Empfang eines entsprechenden MFV-Codes veranlaßt wurde. Ist dies der Fall, so wird zu einem Programmpunkt 165 verzweigt, andernfalls wird zu einem Programmpunkt 170 verzweigt. Bei Programmpunkt 165 veranlaßt die Steuerung 45 den dritten Schalter 76 zur Umschaltung in seine zweite Schalterstellung, falls der dritte Schalter 76 nicht bereits in seiner zweiten Schalterstellung vorliegt. Anschließend werden die Nachrichten 85, 90 und die sprachsynthetisierten Rufnummern 15, 16 bzw. die sprachsynthetisierten Namen und/oder Adressen, die sprachsynthetisierten Daten 30, 31 und Uhrzeiten 35, 36 über die Telekommunikationsschnittstelle 80 und das Telekommunikationsnetz 99 an den fernabfragenden Teilnehmer übertragen. Die Übertragung erfolgt dabei in der gemäß Figur 2 dargestellten Reihenfolge des Inhalts des ersten Speichers 10, wobei zwischen der Wiedergabe der ersten Nachricht 85 und der zweiten Rufnummer 16 bzw. dem entsprechenden Namen und/oder der entsprechenden Adresse eine Pause vorgesehen sein kann, um dem fernabfragenden Teilnehmer eine Zuordnung der übertragenen Nachrichten zu der jeweils zugeordneten Rufnummer bzw. dem jeweils zugeordneten Namen und/oder der jeweils zugeordneten Adresse und den übertragenen Zeitdaten in Form von Datum und Uhrzeit zu ermöglichen bzw. zu vereinfachen. In entsprechender Weise erfolgt bei Programmpunkt 170 eine akustische Wiedergabe des Inhalts des ersten Speichers 10 am Lautsprecher 65, wozu die Steuerung 45 den dritten Schalter 76 veranlaßt, in seine erste Schalterstellung umzuschalten, falls der dritte Schalter 76 nicht bereits seine erste Schalterstellung einnimmt. Weiterhin veranlaßt die Steuerung 45 den zweiten Schalter 75, in seine erste Schalterstellung umzuschalten, falls der zweite Schalter 75 nicht bereits in seiner ersten Schalterstellung vorliegt.

Zusätzlich oder alternativ können die Rufnummern 15, 16, die Daten 30, 31 und die Uhrzeiten 35, 36 auch an der Anzeigeeinheit 95 optisch wiedergegeben werden. Auch bei der Wiedergabe gemäß Programmpunkt 170 kann die Zuordnung der Nachrichten 85, 90 zu den zugehörigen Rufnummern 15, 16, den zugehörigen Daten 30, 31 und Uhrzeiten 35, 36 durch eine Pause zwischen der Wiedergabe der ersten Nachricht 85 und der Wiedergabe der zweiten Rufnummer 16 für den Benutzer erleichtert werden. Entsprechendes gilt, wenn anstelle oder zusätzlich zu der ersten Rufnummer 15 und/oder zu der zweiten Rufnummer 16 ein Name und/oder eine Adresse an entsprechender Stelle im ersten Speicher 10 abgespeichert sind, so daß bei Programmpunkt 170 anstelle oder zusätzlich zu der entsprechenden Rufnummer der ihr zugeordnete Name und/oder die ihr zugeordnete Adresse wiedergegeben werden. Nach Programmpunkt 170 und nach Programmpunkt 165 wird jeweils zu einem Programmpunkt 175 verzweigt. Bei Programmpunkt 175 prüft die Steuerung 45, ob der Benutzer des Telekommunikationsendgerätes 5 an der Eingabeeinheit 50 durch Tastenbetätigung einen automatischen Rückruf einleitet. Ist dies der Fall, so wird zu einem Programmpunkt 180 verzweigt, andernfalls wird das Programm verlassen. Bei Programmpunkt 180 veranlaßt die Steuerung 45 einen automatischen Rückruf an den rufenden Teilnehmer, dessen Nachricht gerade am Lautsprecher 65 wiedergegeben oder über das Telekommunikationsnetz 99 per Fernabtrage übertragen wird. Der automatische Rückruf kann dabei auch während der Wiedergabe oder Übertragung der dieser Nachricht zugeordneten Daten wie Rufnummer, Name, Adresse, Uhrzeit, Datum in gleicher Weise eingeleitet werden. Die Wiedergabe des Inhalts des ersten Speichers 10 am Lautsprecher 65 und gegebenenfalls an der Anzeigeeinheit 95 wird vom Benutzer des Telekommunikationsendgerätes 5 mittels der Eingabeeinheit 50 eingeleitet.

Für den automatischen Rückruf bei Programmpunkt 180 wird entweder die im ersten Speicher 10 abgespeicherte entsprechende Rufnummer 15, 16 oder bei ausschließlicher Abspeicherung des Namens und/oder der Adresse des rufenden Teilnehmers im ersten Speicher 10 die im zweiten Speicher 40 zugeordnete Rufnummer verwendet. Nach Programmpunkt 180 wird das Programm verlassen.

Einträge im ersten Speicher 10 können durch Tastenbetätigung an der Eingabeeinheit 50 vom Benutzer des Telekommunikationsendgerätes 5 gelöscht werden.

Die Vorrichtung 1 ist gemäß Figur 1 als in das Telekommunikationsendgerät 5 integrierter Anrufbeantworter ausgebildet. Die Vorrichtung 1 kann jedoch auch außerhalb des Telekommunikationsendgerätes 5 angeordnet sein. Es ist auch möglich, daß das Telekommunikationsendgerät 5 mobil, d. h. drahtlos ausgebildet ist und über eine Luftschnittstelle mit dem Telekommunikationsnetz 99 verbunden ist. Auch in diesem Fall kann die Vorrichtung 1 in das Telekommunikationsendgerät 5 integriert oder außerhalb des Telekommunikationsendgerätes 5 angeordnet sein. Bei Anordnung der Vorrichtung 1 außerhalb eines solchen mobilen Telekommunikationsendgerätes 5 kann die Vorrichtung 1 als sogenannte Sprach-Mailbox bei einem Netzanbieter vorgesehen sein.

## Patentansprüche

1. Vorrichtung (1) zur Aufzeichnung einer Nachricht (85, 90) eines an einem Telekommunikationsendgerät (5) eingehenden Rufes in einem dem Telekommunikationsendgerät (5) zugeordneten, vorzugsweise digitalen ersten Speicher (10), dadurch gekennzeichnet, daß eine Speicherung einer mit dem eingehenden Ruf an das Telekommunikationsendgerät (5), insbesondere über ein digitales Telekommunikationsnetz (99) übertragenen Identifizierungsinformation (15, 16), die einen rufenden Teilnehmer kennzeichnet, im ersten Speicher (10) erfolgt.

2. Vorrichtung (1) nach Anspruch 1, dadurch gekennzeichnet, daß die Speicherung der Identifizierungsinformation (15, 16) im ersten Speicher (10) nur dann erfolgt, wenn der eingehende Ruf nicht entgegengenommen wird.

3. Vorrichtung (1) nach Anspruch 1 oder 2, dadurch gekennzeichnet, daß bei Nichtentgegennahme des eingehenden Rufes, vorzugsweise nach einer vorgegebenen Anzahl von Rufsignalen, eine Schleifenbelegung im Telekommunikationsendgerät (5) erfolgt, daß während der Schleifenbelegung, vorzugsweise nach einem Signalton, eine Nachricht (85, 90) des rufenden Teilnehmers im ersten Speicher (10) ablegbar ist und daß eine Speicherung der Identifizierungsinformation (15, 16) in Zuordnung zu der Nachricht (85, 90) im ersten Speicher (10) erfolgt.

4. Vorrichtung (1) nach Anspruch 1, 2 oder 3, dadurch gekennzeichnet, daß eine Decodierschaltung (20) vorgesehen ist, die eine über ein analoges Telekommunikationsnetz übertragene Identifizierungsinformation (15, 16) decodiert.

5. Vorrichtung (1) nach einem der vorherigen Ansprüche, dadurch gekennzeichnet, daß die Vorrichtung (1) mit der Identifizierungsinformation (15, 16) eine Rufnummer des rufenden Teilnehmers empfängt und daß eine Speicherung der Rufnummer im ersten Speicher (10) erfolgt.

6. Vorrichtung (1) nach Anspruch 5, dadurch gekennzeichnet, daß durch die im ersten Speicher (10) abgelegte Rufnummer ein automatischer Rückruf einleitbar ist.

7. Vorrichtung (1) nach einem der vorherigen Ansprüche, dadurch gekennzeichnet, daß eine Sprachsyntheseeinheit (25) vorgesehen ist und daß die Sprachsyntheseeinheit (25) die im ersten Speicher (10) abgelegte Identifizierungsinformation (15, 16) in Sprachform ausgibt, wenn eine entsprechende Abfrageanforderung detektiert wird.

8. Vorrichtung (1) nach einem der vorherigen Ansprüche, dadurch gekennzeichnet, daß mit der Speicherung der Identifizierungsinformation (15, 16) eine Speicherung eines Datums (30, 31) und einer Uhrzeit (35, 36) zur Kennzeichnung des Zeitpunktes des eingehenden Rufes im ersten Speicher (10) erfolgt.

9. Vorrichtung (1) nach einem der vorherigen Ansprüche, dadurch gekennzeichnet, daß die Vorrichtung (1) aus der Identifizierungsinformation (15, 16) einen Namen und/oder eine Adresse des rufenden Teilnehmers durch Zuordnung der Identifizierungsinformation (15, 16) zu Namens- und/oder Adreßdaten mittels einer insbesondere in einem zweiten Speicher (40) abgelegten Zuordnungstabelle ermittelt und daß eine Speicherung des Namens im ersten Speicher (10) erfolgt.

10. Vorrichtung (1) nach einem der vorherigen Ansprüche, dadurch gekennzeichnet, daß die Vorrichtung (1) als Anrufbeantworter oder als Aufzeichnungseinheit, insbesondere einer Sprach-Mailbox, in einem Mobilfunknetz ausgebildet ist.

11. Vorrichtung (1) nach einem der vorherigen Ansprüche, dadurch gekennzeichnet, daß die im ersten Speicher (10) abgelegte Identitizierungsinformation (15, 16) an einer Anzeigeeinheit (95) wiedergebbar ist, wenn eine entsprechende Abfrageanforderung detektiert wird.
